# NEUE EUROPÄISCHE PATENTSCHRIFT

(11) **EP 1 329 602 B2**
(45) Veröffentlichungstag und Bekanntmachung des Hinweises auf die Entscheidung über den Einspruch: **29.04.2009**
(45) Hinweis auf die Patenterteilung: 17.05.2006
(21) Anmeldenummer: 02026515.3
(22) Anmeldetag: 27.11.2002
(51) Int. Cl.: F01N 3/28, B01J 35/04, F01N 3/022, F01N 3/035

(54) **Metallfolie mit eingeprägter Struktur zur Verwendung bei der Abgasreinigung und Werkzeug und Verfahren zu ihrer Herstellung**
Metal foil with embossed structure for use in exhaust gas purification and tool and process for preparing same
Bande métallique avec structure gaufrée pour l'usage à la purification de gaz d'échappement et outil et procédé de fabrication d'une telle bande

(30) Priorität: 16.01.2002 DE 10201481; 05.06.2002 DE 10224997
(43) Veröffentlichungstag der Anmeldung: 23.07.2003
(73) Patentinhaber: Oberland Mangold GmbH, 82438 Eschenlohe (DE)
(72) Erfinder: Mangold, Christian, 82438 Eschenlohe (DE); Mangold, Matthias, 82467 Garmisch-Partenkirchen (DE)
(74) Vertreter: Lang, Friedrich

(56) Entgegenhaltungen:
- EP-A- 0 933 131
- EP-A2- 1 147 807
- DE-A1- 4 234 931
- DE-A1- 19 808 934
- US-A- 2 672 958
- US-A- 3 869 778
- US-A- 4 665 051
- US-A- 4 672 809

## Beschreibung

Die Erfindung betrifft eine Metallfolie mit eingeprägter Struktur zur Verwendung bei der Abgasreinigung nach dem Oberbegriff von Anspruch 1.

Derartig strukturierte Metallfolien werden meist für Katalysatoren und Partikelabscheidevorrichtungen bei Abgasreinigungsvorrichtungen eingesetzt.

Hierbei ist es beispielsweise bekannt einen Metallfolienkörper aus gewellten und glatten Lagen aus Metallfolie aufzuwickeln und die Lagen untereinander und an einem den Wickelkörper umgebenden zylindrischen Gehäuse zu befestigen. Somit ergeben sich je nach Ausbildung der Oberflächenstruktur der einzelnen Lagen und je nach Anordnung der nebeneinanderliegenden Metallfolien Strömungskanäle zum Durchströmen des Abgases durch den Metallfolienkörper. Dabei sind die Metallfolien meist mit einer die spezifische Oberfläche vergrößernden Schicht oder einer Edelmetallbeschichtung versehen.

Bevorzugte Anwendungen der als Wickelkörper ausgebildeten Metallfolienkörper sind die bei der Abgasreinigung bei Verbrennungsmaschinen eingesetzten Partikelabscheidevorrichtungen zur Ablagerung von Rußpartikeln und Trägerkörper für Katalysatoren, insbesondere bei gasförmigen Emissionen von Diesel- oder Benzinmotoren.

Bei Verwendung des Metallfolienkörpers als Katalysatorträger findet beim Durchströmen der Strömungskanäle ein Umwandlungsprozess zur Abgasreinigung statt. Die Umlenkung und Verwirbelung des Abgases soll hierbei eine erhöhte Kontaktierung des Abgases mit den Wandungen und den darauf aufgebrachten, für den Umwandlungsprozess nötigen, katalytisch aktiven Beschichtungen ermöglichen.

Bei der Verwendung der Metallfolien zur Abscheidung von Rußpartikeln verändert die Umlenkung und Verwirbelung die Richtung und Geschwindigkeit der Strömung des Abgases und ermöglicht durch Diffusion und Impaktion eine Ablösung der Partikel aus der Strömung und eine Ablagerung der Partikel in den strömungsabgewandten Bereichen.

Bei derartigen Metallfolien werden unterschiedlichste Oberflächenstrukturierungen und Anordnung der Metallfolien und Kombinationen mit glatten Folien angewandt, um eine geeignete Verwirbelung zu erzeugen.

Allgemein ist es bekannt, gattungsgemäße Metallfolien in Form von Wellen oder Falten unter Ausbildung einer wechselnden, eventuell mit Öffnungen versehenen Oberflächentopographie durch Berge und Täler zu schaffen.

Die DE 20117873 U1 zeigt einen Filterkörper zur Abgasreinigung aus einer Folie, welche mit einer Struktur versehen ist, die Erhebungen und Senken und in den Erhebungen bzw. Senken angeordneten Schaufeln aufweist. Dabei sind die Erhebungen und Senken in Längsrichtung, welche parallel zur Hauptströmungsrichtung verläuft, ausgerichtet, d.h. die Wellen verlaufen quer zur Hauptströmungsrichtung. Die Schaufeln bilden mit einem Schaufeleintritt und einem Schaufelaustritt einen Durchlass zur Ausbildung durchströmbarer Kanäle und ermöglichen ein Übertritt des Abgasstromes in benachbarte Lagen des Filterkörpers.

Aus der DE 3744265 C2 ist ein Rußfilter zur Abgasreinigung mit einer Struktur der vorstehenden Art bekannt, bei der eine Lage aus gewelltem oder gefaltetem Stahlblech abwechselnd mit einer Lage aus ebenen Filtermaterial zu einem Wickelkörper oder Packet aufgewickelt oder gestapelt ist. Hierbei weist die Lage aus gewelltem oder gefaltetem Material eine Struktur aus in Hauptströmungsrichtung nebeneinander abwechselnd angeordneten Bergen und Tälern und quer zur Hauptströmungsrichtung jeweils in Abständen angeordnete Stege auf. Diese Stege verlaufen jeweils durchgehend und auf einem gleichbleibenden Höhenniveau. Bei auf Talhöhenniveau angeordneten Stegen besteht ein höhengleicher Anschluß zwischen Steg und stromaufwärts und stromabwärts des jeweiligen Steges in Hauptströmungsrichtung benachbarten zwischen den Bergen angeordneten Tälern. Dementsprechend besteht bei auf Berghöhenniveau angeordneten Stegen ein höhengleicher Anschluß zwischen Steg und stromaufwärts und stromabwärts des jeweiligen Steges in Hauptströmungsrichtung benachbarten angeordneten Bergen. Somit besteht in Hauptströmungsrichtung abschnittsweise eine direkte höhengleiche Verbindung der Berge bzw. Täler. Die auf Talhöhenniveau querlaufenden Stege haben wenig Wirkung auf die Änderung der Strömungsrichtung und Strömungsgeschwindigkeit des Abgases, da keine direkte Ablenkung des Abgases erzwungen wird. Insgesamt ergibt sich wenig Raum als Möglichkeit für die Ablagerung von Partikeln, da der Strömungskanalquerschnitt sowohl bei Betrachtung der einzelnen Metallfolienlage als auch bei Betrachtung des Gesamtkörpers wenige Störungszonen enthält und eher gleichmäßig aufgebaut ist. Die wesentliche Verwirbelung wird hier durch eine Ablenkung in benachbarte Lagen erreicht, wobei eine sehr exakte gegenseitige Anordnung der Lagen erforderlich ist, um einen ausreichenden Querschnitt zum Durchtritt in die benachbarten Lagen bereitzustellen. Insgesamt gestalten sich die entstehenden Strömungskanäle strömungsfreundlich und erzeugen wenig Verwirbelungen, da wenige die Strömung umlenkende Anströmkanten vorhanden sind, sondern eher strömungsführende schräge Leitflächen aufweisen. Daraus ergeben sich auch wenig strömungsberuhigteren leeseitig angeordneten Zonen, die für eine Ablagerung notwendig sind.

Gattungsgemäße Metallfolien sind ferner sind aus EP-A-0933131 und US-A-4665051 bekannt. Hierbei sind benachbarte Reihen von Bergen und Tälern in Strömungsrichtung jeweils durch ebenen Abstandsstreifen getrennt, so dass in Strömungsrichtung in diesem Bereich keinerlei Umlenkung des Gasstroms erfolgt.

Der Erfindung liegt die Aufgabe zugrunde, eine Metallfolie zur Verwendung bei der Abgasreinigung zu schaffen, die eine geeignete Oberflächenstruktur zur verbesserten Verwirbelung des Abgases aufweist und gleichzeitig auch Ablagerungsmöglichkeiten für im Abgasstrom enthaltene Partikel schafft.

Die Aufgabe wird mit den im Anspruch 1 angegebenen Merkmalen gelöst.

Diese versetzte Anordnung benachbarter Reihen schafft eine schachbrettartige Anordnung der Berge und Täler und somit kurze abschnittsweise ungestörte Strömungswege in Hauptströmungsrichtung. Mit der Hauptströmungsrichtung wird die stromaufwärts der Metallfolie vor Auftreffen auf die Metallfolie vorherrschende Richtung des Abgasstromes bezeichnet. Die Berge umfassen jeweils eine punkt-, linien- oder flächenartig ausgebildete höchste Stelle mit umlaufenden, im wesentlichen in und quer zur Hauptströmungsrichtung angeordneten Flanken bzw. Hängen, die eine Verbindung zu den umliegenden Tälern herstellen. Die Täler umfassen dementsprechend jeweils eine punkt-, linien- oder flächenartig ausgebildete tiefste Stelle. Die Anstiegs- bzw. Abfallflanken bezeichnen die bezüglich der Hauptströmungsrichtung luv- bzw. leeseitig angeordneten Flanken. Bei der Hauptanwendungsform verläuft die Ausrichtung der Bergkämme parallel zur Hauptströmungsrichtung. Die Metallfolie kann aber auch bei einer schräg bzw. quer zur Ausrichtung der Bergkämme gerichteten Hauptströmungsrichtung angewendet werden. Alle Flanken können unterschiedliche Neigungen aufweisen, wobei sich vor allem eine steilere Ausbildung der leeseitig angeordneten Abfallflanken vorteilhaft auf die Partikelablagerung auswirkt.

Die aufgrund des Versatzes benachbarter Reihen zwischen zueinander versetzt angeordneten Bergen entstehende Senke verläuft von einem Berg einer ersten Reihe entlang dessen Abfallflanke und über die Anstiegsflanke eines in der zur ersten Reihe benachbarten zweiten Reihe versetzt angeordneten Berges. Die Senke ermöglicht somit eine Verbindung der lokal stromabwärts und stromaufwärts benachbarten Täler. Die lokal im Bereich stromabwärts und stromaufwärts der Senke vorhandene Strömungsrichtung kann von der Hauptströmungsrichtung variieren und verläuft in der Regel schräg zur Hauptströmungsrichtung. Der für den Übergang des Abgases von einem Tal über die Senke in das stromabwärts benachbarte Tal zur Verfügung stehende Querschnitt wird durch das Maß des Versatzes der benachbarten Reihen bestimmt. Die vertikale Lage des Tiefpunkts der Senke befindet sich unterhalb des höchsten Punktes der die Senke bildenden Anstiegs- bzw. Abfallflanke und oberhalb der Höhe der zur Senke benachbarten Täler.

Die unregelmäßigen Übergänge zwischen den Anstiegs- und Abfallflanken mit Ausbildung der Senken und die schachbrettartige Anordnung der Berge und Täler ermöglicht somit eine verbesserte Verwirbelung des Abgases durch die seitliche bzw. schräge Ablenkung und, je nach Maß des Reihenversatzes der benachbarten Reihen, auch eine vertikale Ablenkung über die Senken. Die im Bereich der Abfall- und Anstiegsflanken vorhandenen Senken bilden unregelmäßige Störungszonen und Verwerfungen zur Verwirbelung und Kontaktierung des Abgases mit der Oberfläche. Weiterhin bietet die eingeprägte Struktur der Metallfolie stromabwärts der jeweiligen Senke und in den luftabgewandten Bereichen günstige Räume zur Ablagerung von im Abgasstrom enthaltenen Partikeln.

Es werden Kanäle zur Umlenkung und Verwirbelung des Abgases ausgebildet, die eine erhöhte Kontaktierung des Abgases mit der Oberfläche der Struktur und auch einen erhöhten Partikelabscheidegrad erreichen. Die Strömungsquerschnitte sind so bemessen, dass es nicht zu einem unerwünschten Anstieg des Abgasgegendruckes und zu einer verminderten Leistung der Verbrennungsmaschine führt.

Der die Erfindung betreffende Begriff "Metallfolie" bezeichnet unperforierte und perforierte Metallfolien, Bleche, Streckmetalle, Vliese und Fasermaterial, wobei diese Materialien auch mit einer katalytischen Beschichtung versehen werden können. Die Perforation umfasst auch in der Metallfolie eingebrachte Durchbrüche. Vorzugsweise haben diese Durchbrüche eine Größe von 100 bis 500 µm. Im vorliegenden Zusammenhang wird hierfür der Begriff "Metallfolie" verwendet.

Eine bevorzugte Ausführungsform besteht darin, dass die Anstiegsflanken und/oder die Abfallflanken trapezförmig ausgebildet sind. Hierdurch lässt sich in und quer zur Hauptströmungsrichtung die Form der Senke und damit der entstehende Querschnitt des Freiraumes zum Übertritt des Abgases beeinflussen.

Eine weitere bevorzugte Ausführungsform besteht darin, dass die Anstiegs- bzw. Abfallflanke mindestens eine Öffnung aufweist. Des weiteren können auch mehrere Öffnungen in einer Anstiegs- bzw. Abfallflanke angeordnet sein und die Öffnungen verschiedener Anstiegs- bzw. Abfallflanken können unterschiedlich ausgeführt sein. Die an die Öffnungen angrenzenden Bereiche der Anstiegs- bzw. Abfallflanken können dabei unregelmäßig geformt sein, unterschiedliche Neigungen aufweisen und auch nach innen oder außen gewölbt sein.

In einer weiteren bevorzugten Ausführungsform nehmen die Öffnung im wesentlichen den Bereich der Anstiegsflanke (4a, 4b) bzw. Abfallflanke (5a, 5b) ein.

Es ist vorteilhaft, dass die Öffnung eine bogenförmige Randbegrenzung aufweist. Die Randbegrenzungen können auch beispielsweise linien-, schlitzartig bzw. bogen-, ellipsen-, halbkreis-, oder kreisförmig ausgebildet sein.

Eine weiter bevorzugte Ausführungsform besteht darin, dass die Anstiegs- bzw. Abfallflanken vollständig offen sind.

Bei allen vorgenannten Ausführungsformen mit der Anordnung von einer Öffnung wird ermöglicht, dass das Abgas in benachbarte Lagen strömen kann. Ein Vorteil besteht in der zusätzlichen Erzeugung von Verwirbelungen und Ablenkung des Abgases quer zur Hauptströmungsrichtung in benachbarte Lagen des Filter- bzw. Katalysatorkörpers werden zusätzliche Strömungskanäle und Anströmkanten geschaffen und somit eine Brechung bzw. Umlenkung der Stromlinien des Abgases bewirkt.

Vorteilhaft ist es, dass an den Anstiegsflanken und/oder Abfallflanken wulstartige Bereiche, welche die Senken bilden, ausgebildet sind. Diese wulstartigen Bereiche können auch in den Bereich der quer zur Hauptströmungsrichtung bzw. quer zum Grat der Berge geneigten Anstiegsflanken und Abfallflanken übergehen. Die Form der wulstartigen Bereiche wird durch die Abmessungen und Neigungen der Berge, Täler, Anstiegs- und Abfallflanken und deren Beabstandung zueinander bestimmt, wobei sowohl eine weiche, abgerundete Form, als auch eine kantige, faltenartige Ausbildung gewählt werden kann.

Zweckmäßig ist es auch, dass zwischen den wulstartigen Bereichen Vertiefungen angeordnet sind. Diese kuhlen- bzw. wabenartigen Eindrückungen schaffen geeignete Räume zur Ablagerung von im Abgas enthaltenen Partikeln.

Vorteilhaft ist es weiterhin, dass in den Vertiefungen Katalysatorgranulat angeordnet ist. Die Vertiefungen bieten mit ihren seitlichen wulstartigen Bereichen geeignete Verankerungsmöglichkeiten und Platzverhältnisse zur Anordnung der beispielsweise rund ausgebildeten Granulate. Dabei werden die Granulate beispielsweise zwischen den seitlichen wulstartigen Bereichen in den Vertiefungen eingeklemmt. Es können auch verschiedenartig beschichtete Granulate verwendet werden.

Eine verbesserte Verwirbelung wird auch dadurch erzielt, dass die Berge und/oder Täler unterschiedliche Höhen aufweisen. Eine weitere Ausgestaltung sieht vor, dass die Berge und/oder Täler unterschiedliche Längen und/oder Breiten aufweisen. Die Variation der Abmessungen erzeugt die gewünschten Turbulenzen beim Durchströmen der Metallfolie und erfordert weniger Genauigkeit beim Herstellungsverfahren der Metallfolie.

Zweckmäßig ist es auch, dass die Berge und Täler plateauartig ausgebildet sind. Diese Form beschreibt eine rechteckige, abgerundete bzw. ellipsenförmige im wesentlichen ebene begrenzte Fläche, die in und quer zur Hauptströmungsrichtung von jeweils einer Anstiegs- und Abfallflanke begrenzt wird. Die plateauartigen Berge und Täler können als Auflageflächen und zur Beabstandung bei Aufwicklung der Metallfolie bzw. bei kombinierter Anordnung mit weiteren Metallfolien dienen.

Alternative Ausführungsformen bestehen darin, dass die Berge und Täler wellenförmig oder spitz ausgebildet sind.

Eine weitere bevorzugte Ausführungsform besteht darin, dass an der Abgaseintritts- und/oder Abgasaustrittsseite die Berge und Täler schräg zur Hauptströmungsrichtung angeordnet sind. Hierdurch ist eine schräg zur Hauptströmungsrichtung geneigte Zuführung des Abgases auf die Eintrittsseite bzw. eine geneigte Abführung an der Austrittsseite der Metallfolie möglich. Dies erweist sich besonders vorteilhaft bei stromaufwärts bzw. stromabwärts der Metallfolie beengten Platzverhältnissen.

Bei der Kombination mehrerer Metallfolien kann eine gleichsinnige oder gegensinnige Ausrichtung der an der Abgaseintritts- und/ oder Abgasaustrittsseite angeordneten Berge und Täler gewählt werden. Somit kann neben der Umlenkung des Abgasstromes auch eine Verwirbelung des Abgasstromes stromaufwärts und stromabwärts der Metallfolie erzielt werden.

Die Metallfolie kann eine oder mehrere Lagen aufweisen und zu einem Stapel gestapelt oder zu einem Wickelkörper gewickelt und zweckmäßigerweise von einem Gehäuse umgeben werden. Bei der Kombination der die eingeprägte Struktur aufweisende Metallfolie mit einer glatten Lage können verschiedene Anordnungen gewählt werden. Bei der Anordnung von zwei benachbarten erfindungsgemäßen Metallfolien und einer dazwischenliegenden glatten Metallfolie können die zwei benachbarten erfindungsgemäßen Metallfolien in gleichen oder versetzten Bereichen an der glatten Lage anliegen. Die glatte Lage kann hierbei mit Öffnungen und/ oder Erhebungen versehen sein. Zweckmäßigerweise sind die Öffnungen schlitzartig in die beulenartigen Erhebungen eingeschnitten und quer zur Hauptströmungsrichtung ausgerichtet. Bei einer kombinierten Anordnung mit der erfindungsgemäßen Metallfolie ist es zweckmäßig, dass die in den Erhebungen angeordneten Öffnungen der glatten Lage im Bereich der Berge der strukturierten Metallfolie zu liegen kommen.

Vorteilhafterweise ist die Metallfolie mit eingeprägter Struktur zur Verwendung bei der Abgasreinigung mindestens teilweise mit einer Granulatschicht versehen ist. Daraus ergeben sich mehrere Vorteile. Zum einen wird mit der größtenteils unregelmäßigen Oberflächenstruktur der Granulatschicht eine Vergrößerung der Oberfläche erreicht. Dadurch kann die Strömungsgrenzschicht des entlang der Oberfläche strömendenden Abgases gebrochen werden, wodurch Turbulenzen erzeugt werden. Andererseits strömt das Abgas auch teilweise in die poröse Struktur der Granulatschicht ein und durchströmt diese. Dabei lagern sich dann beispielsweise Rußpartikel in den Poren der Granulatschicht ab. Bei Verwendung von unterschiedlichen Korngrößen, beispielsweise in Form einer Abstufung der Korngrößen in Hauptdurchströmungsrichtung, kann dieser zusätzliche Filtereffekt gesteuert werden und die Bildung von Filterkuchen vermieden werden.

In einer bevorzugten Ausführungsform die Anstiegsflanken und/oder Abfallflanken sind mindestens teilweise mit der Granulatschicht versehen, da diese am stärksten von der Abgasströmung beaufschlagt werden. Die Flanken können dabei sowohl an der Unterseite als auch an der Oberseite der Metallfolie liegen. Grundsätzlich kann die Granulatschicht auf allen Bereichen der Metallfolie aufgebracht sein, wobei die Granulatschicht unterschiedliche Schichtdicken und/oder Korngrößen aufweisen kann. Die Materialien der Granulatschicht können eine faserige, körnige bzw. pulverförmige Struktur aufweisen und Korngrößen von 25 bis 400 µm, vorzugsweise im Bereich von 50 bis 250 µm, aufweisen.

Eine weitere bevorzugte Ausführungsform besteht darin, dass als Granulatschicht Kornpulver verwendet wird, welches mindestens einen metallischen und/oder mindestens einen mineralischen Stoff umfasst.

Zweckmäßigerweise umfasst das Kornpulver als metallischen Stoff Sintermetall. Bei Verwendung eines rein metallischen Kornpulvers, wie beispielsweise Sintermetall, ohne Zusatz von mineralischen Stoffen, können die Körner bei entsprechenden klimatischen Verhältnissen untereinander und mit der Metallfolie in Verbindung gehen. Bei der Verwendung eines aus metallischen und mineralischen Stoffen zusammengesetzten Kornpulvers bzw. bei einem rein mineralischen Kornpulver umfasst das Kornpulver zweckmäßigerweise zusätzlich Lot. Dieses wird zur Herstellung des Kornverbunds und zur Befestigung der Granulatschicht auf der Metallfolie benötigt. In einer weiteren bevorzugten Ausführungsform ist die Granulatschicht auf die Metallfolie aufgesintert.

Die Erfindung kann bei einer Filtervorrichtung verwendet werden, die abwechselnd die erfindungsgemäße Metallfolie und eine glatte Folie aufweist. Die glatte Folie ist perforiert und kann aus Metall, Blech, Streckmetall, Vlies und Fasermaterial bestehen, wobei diese Materialien auch mit einer katalytischen Beschichtung versehen werden können. Dabei ist es vorteilhaft, dass die Metallfolie und/oder die glatte Folie mehrere Lagen aufweist. Zweckmäßig ist es auch, dass die Metallfolie und/oder die glatte Folie aus Streckmetall ist und verschiedene Lagen unterschiedliche Maschenweiten aufweisen. Besonders günstig ist eine bezüglich des Spiralkörpers radial von außen nach innen abnehmende Maschenweite der unterschiedlichen Lagen. Somit weist eine Lage jeweils eine im wesentlichen konstante Maschenweite auf und eine radial weiter innen liegende Lage einen zur vorgenannten Lage kleinere Maschenweite auf.

Die Herstellung der erfindungsgemäßen Metallfolie wird durch ein Werkzeug mit Zahnwalzenpaar ermöglicht, wobei die Walzenzähne quer zur Umfangsrichtung der Walze so beabstandet sind, dass das Material beim Prägevorgang zur Ausbildung der Anstiegsflanken und Abfallflanken zwischen den Walzenzähnen ausweichen kann und dass die Drehachse der Walze parallel zur Hauptströmungsrichtung verläuft. Eine geeignete Ausbildung und Beabstandung der Walzenzähne bewirkt beim Prägevorgang eine abschnittsweise gezielte bzw. im Bereich der Anstiegs- und Abfallflanken eine teilweise steuerbare freie Materialstauchung aus Materialüberschuss. Somit können sich die Anstiegs- und Abfallflanken zur Bildung des Senken in einem gewissen Maß frei verformen. Die ungleichmäßigen Verformungen ergeben sich auch je nach lokaler Materialbeschaffenheit, lokalem Verformungsverhalten, sowie Form und Druck der Walzenzähne. Die im Bereich der Anstiegs- und Abfallflanken liegenden Abschnitte der Oberflächentopographie können sich in wulst-, falten-, mulden-, spalt-, kerben- und kuhlenartiger Weise und in Form von Eindrückungen, Ausbeulungen und Verwerfungen ausbilden. Auf Grund dieser begrenzt ungleichmäßigen, die Verwirbelungen fördernden Modellierung ist eine geringere Genauigkeit im Vergleich zu herkömmlichen Herstellungsverfahren erforderlich.

Zur Ausbildung der Öffnungen ist es vorteilhaft, dass die Walzenzähne scharfkantige Erhebungen aufweisen. Dabei ist es zweckmäßig, dass die scharfkantigen Erhebungen bezogen auf die Drehachse der Walze radial nach außen spitz zulaufen und/oder dreiecks- bzw. kegelförmig ausgebildet sind. Mit der Schaffung eines derartigen Werkzeuges wird die Herstellung der erfindungsgemäßen Metallfolie in einem einzigen Arbeitsgang ermöglicht.

Die scharfkantigen Erhebungen beim Prägevorgang schlitzen bzw. schneiden zuerst die Metallfolie ein und bilden anschließend die Walzenzähne die Öffnungen und die Struktur aus Der mittels der scharfkantigen Erhebungen erzeugte Schlitz bzw. Schnitt kann zunächst auch nur einen Teil dessen Endabmessungen haben und als Hilfe zur Herstellung der endgültigen Öffnung dienen. Dies ermöglicht dann im Zuge des Prägevorgangs ein gezieltes bzw. kontrolliertes Reißen und Wegdrücken zur Ausbildung der Öffnungen und der Struktur durch die Walzenzähne. Alternativ können auch mehrere Lagen der Metallfolie übereinander angeordnet werden und erst anschließend der Prägevorgang durchgeführt werden. Für die Metallfolie kann auch Streckmetall mit unterschiedlichen Maschenweiten verwendet werden. Bei der Aufwicklung zu einem Spiralkörper ist es insbesondere zweckmäßig, die Maschenweite radial von außen nach innen zu verkleinern.

Bei der Herstellung einer Metallfolie mit eingeprägter Struktur wird die Aufgabe weiterhin dadurch gelöst, dass eine Klebeschicht mindestens teilweise auf der Metallfolie aufgebracht wird, anschließend die Granulatschicht mindestens teilweise auf der Metallfolie aufgebracht wird und anschließend das Wickeln der Metallfolie erfolgt. Dabei sollte die Klebeschicht mindestens in den Bereichen aufgebracht werden, in welchen die Granulatschicht vorgesehen ist.

Alternativ erfolgt zuerst das Wickeln der Metallfolie, anschließend wird die Klebeschicht mindestens teilweise und dann die Granulatschicht mindestens teilweise auf der Metallfolie aufgebracht.

Die Aufbringung der Granulatschicht und der Klebeschicht kann auch gleichzeitig erfolgen. Dabei eignet sich insbesondere ein Sprühverfahren.

Bei einem weiteren alternativen Herstellungsverfahren wird zuerst die Klebeschicht mindestens teilweise auf der Metallfolie aufgebracht, anschließend die Metallfolie gewickelt und nachfolgend die Granulatschicht mindestens teilweise auf der Metallfolie aufgebracht. Sowohl die Klebeschicht als auch die Granulatschicht können aufgesprüht werden. Anstelle eines Klebers können grundsätzlich auch Binder oder andere Materialien zur Verbindung der Kornstruktur und Fixierung der Granulatschicht auf der Metallfolie verwendet werden.

Alternativ kann die Granulatschicht auf die Metallfolie wahlweise vor oder nach dem Wickeln aufgeschüttet oder aufgedüst werden.

Die Fixierung der Granulatschicht auf der Metallfolie kann auch durch Verdichtung erfolgen, beispielsweise mittels Druck oder Verquetschung. Nach Aufbringung der Granulatschicht kann das überschüssige Granulat bzw. Kornpulver beispielsweise durch Ausschütteln, Rütteln oder Ausblasen entfernt werden.

In einem weiteren Herstellungsverfahren wird die Granulatschicht durch Sintern auf die Metallfolie aufgebracht. Dabei kann die Granulatschicht vor oder nach dem Wickeln der Metallfolie auf diese aufgebracht werden und anschließend der Wickelkörper in einem Sinterofen gebacken bzw. gesintert werden.

Zur Herstellung des endgültigen Wickelkörpers werden die Lagen der Metallfolie mindestens teilweise verlötet. Vorteilhafterweise erfolgt die Verlötung der einzelnen Lagen und das Aufsintern der Granulatschicht in einem Arbeitsgang. Zweckmäßigerweise herrschen während dieses Arbeitsganges konstante klimatische Verhältnisse, insbesondere eine konstante Temperatur.

Die beiden Verfahren zur Herstellung der Metallfolie können auch kombiniert werden und die einzelnen Verfahrensschritte können in verschiedenen Reihenfolgen ablaufen. Die Herstellungsverfahren betreffen auch alle beschriebenen Metallfolien. Beispielsweise kann eine Metallfolie unmittelbar nach Durchlaufen der Prägewalze bereits mit der Klebeschicht und gleichzeitig oder nachfolgend mit der Granulatschicht versehen werden. Bei der Beschichtung der Metallfolie mit der Granulatschicht ist wie beim Prägevorgang größtenteils auch keine große Genauigkeit erforderlich, da unterschiedliche Dicken der Granulatschicht ebenfalls zu einer vermehrten Verwirbelung des Abgasstromes führen. Diese Zusammenschaltung mehrerer Arbeitsgänge ermöglicht somit eine kostengünstige maschinelle Fertigung.

Nachfolgend wird die Erfindung anhand mehrerer bevorzugter Ausführungsbeispiele unter Bezugnahme auf die Zeichnungen weiter erläutert. Es zeigen schematisch:
- Fig. 1a: eine erste Anordnung mit jeweils einem Berg mit Anstiegs- und Abfallflanken und jeweils einem Tal zweier benachbarter gegeneinander versetzter Reihen in einer perspektivischen Ansicht;
- Fig. 1b: eine zweite Anordnung zweier benachbarter Reihen gemäß Fig. 1 mit in den Anstiegsflanken angeordneten Öffnungen in einer perspektivischen Ansicht;
- Fig. 2: die Anordnung gemäß Fig. 1 in einer Ansicht in Hauptströmungsrichtung;
- Fig. 3: einen Ausschnitt einer Metallfolie in einer perspektivischen Ansicht;
- Fig. 4: einen Ausschnitt einer weiteren Metallfolie in einer perspektivischen Ansicht; und
- Fig. 5: einen Ausschnitt einer kombinierten Anordnung der erfindungsgemäßen Metallfolie mit einer glatten, Öffnungen und Erhebungen aufweisenden Lage in einer perspektivischen Ansicht;

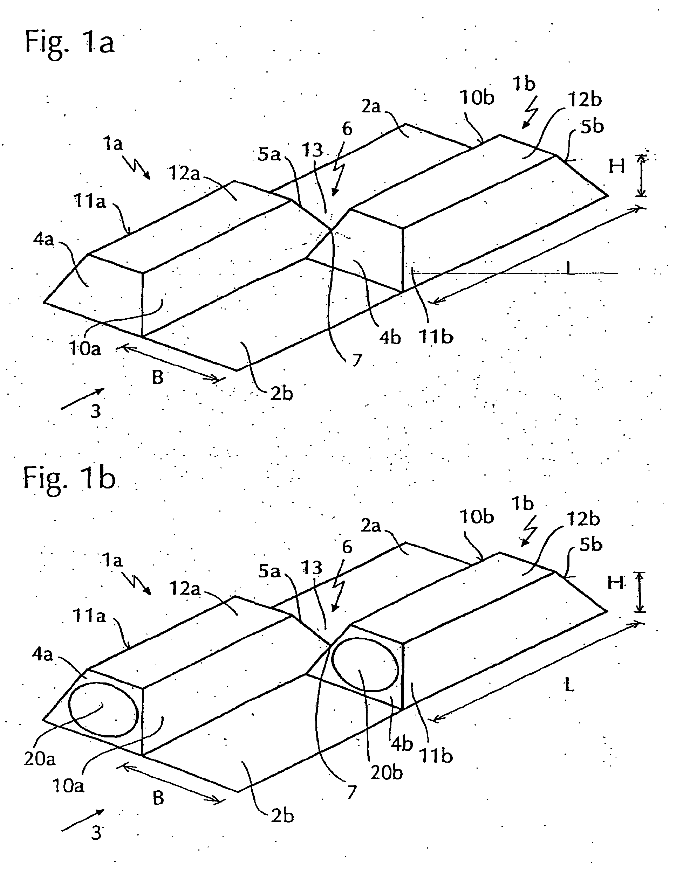

Fig. 1a zeigt eine Ausführungsform einer Metallfolie mit eingeprägter Struktur in einem Ausschnitt in einer perspektivischen Ansicht. Hierbei ist in einer ersten Reihe ein Berg 1a mit trapezförmigen Anstiegsflanken 4a, 11a und trapezförmigen Abfallflanken 5a, 10a und ein bezüglich der mit Pfeil 3 angedeuteten Hauptströmungsrichtung stromabwärts des Berges 1a angeordnetes Tal 2a vorhanden. Die stromaufwärts des Plateaus 12a angeordneten Anstiegsflanke 4a und die stromabwärts des Plateaus 12a angeordnete Abfallflanke 5a weisen Neigungen gleiches Betrages und gegensinniger Richtungen auf. Die quer zur Hauptströmungsrichtung gerichtete Anstiegs- bzw. Abfallflanke 11a bzw. 10a sind ebenso trapezförmig und mit Neigungen gleiches Betrages und gegensinniger Richtungen ausgebildet.

Die zur Hauptströmungsrichtung 3 und mit Versatz zur ersten Reihe parallel angeordnete zweite Reihe weist gleichartige Elemente wie die zuvor beschriebene erste Reihe auf. Der Berg 1b wird von dem Plateau 12b und den trapezförmigen Anstiegsflanken 4b, 11b und den trapezförmigen Abfallflanken 5b, 10b gebildet. Die Berge 1a und 1b weisen in diesem Ausführungsbeispiel die gleiche Höhe H, die gleiche Länge L und die gleiche Breite B auf. Im Unterschied zur ersten Reihe ist hier das Tal 2b in Hauptströmungsrichtung stromaufwärts des Berges 1b angeordnet. Durch die versetzte Anordnung der benachbarten Reihen wird die Senke 6 durch die Abfallflanke 5a und die Anstiegsflanke 4b gebildet. Hierbei kommt der Tiefpunkt 7 der Senke 6 auf einer Höhe zwischen dem höchsten Punkt der die Senke bildenden Anstiegs- bzw. Abfallflanke 5a bzw. 4b und oberhalb der Höhe der zur Senke 6 benachbarten Täler 2a und 2b zu liegen.

Bei Betrachtung in Hauptströmungsrichtung 3 verläuft die Senke 6 somit von der Höhe des Plateaus 12a des Berges 1a hangabwärts schräg zur Hauptströmungsrichtung entlang der Abfallflanke 5a bis zu einem Tiefpunkt 7 und von dort weiterhin schräg zur Hauptströmungsrichtung hangaufwärts entlang der Anstiegsflanke 4b bis zum Plateau 12b des Berges 1b.

Die in den Zeichnungen abschnittsweise linear dargestellte Oberflächentopographie und die Übergänge zwischen den linearen Abschnitten sind hier vereinfacht dargestellt und können auch abgerundet bzw. bogenförmig verlaufen.

Somit bildet der von der Senke 6 und einer gedachten Verbindung zwischen den Plateaus 12a und 12b eingeschlossene Freiraum 13 eine Übergangsmöglichkeit für das Abgas, um vom Tal 2b über die Senke 6 in das Tal 2a zu gelangen. Beim Durchströmen des Freiraumes 13 werden die Strömungsfäden der lokale Strömungsrichtung umgelenkt bzw. gebrochen. Hierbei kommt es auch zu einer gewünschten Störung der im Bereich der Wandungen vorhandenen Grenzschicht kommen, so daß ein größerer Anteil des Gasstromes mit den Wandungen in Kontakt kommt. Die in den jeweiligen Strömungsquerschnitten entstehenden unterschiedlichen Druckverhältnisse bewirken vor allem stromabwärts der Senke 6 lokale Sogwirkungen. Diese fördern ein Abscheiden der im Abgasstrom enthaltenen Partikel und tragen somit zur Ablagerung der Teilchen insbesondere an der Leeseite der Senke 6 bei. Im Bereich des Aufeinandertreffens der Anstiegs- und Abfallflanken 4b und 5a können wulstartige Bereiche, faltenartige Verwerfungen und Ausbeulungen ausgebildet sein. Die Ausbildung der Oberflächentopographie im Bereich der Anstiegs- und Abfallflanken wird durch eine im wesentlichen ungezielte Materialstauchung aus Materialüberschuss bestimmt. Somit können sich die Anstiegs- und Abfallflanken zur Bildung des Senken in einem gewissen Maß frei verformen. Zwischen diesen die jeweils benachbarten Berge und Täler verbindende Bereiche können wabenartige Eindrückungen und Vertiefungen vorhanden sein, welche sich auch für eine Anordnung von Katalysatorgranulat eignen.

Fig. 1b zeigt eine weitere Ausführungsform einer Metallfolie mit eingeprägter Struktur mit Anordnung zweier benachbarter Reihen gemäß Fig. 1a und mit in den Anstiegsflanken angeordneten Öffnungen in einem Ausschnitt in einer perspektivischen Ansicht. Hierbei ist in der Anstiegsflanke 4a eine Öffnung 20a und in der Anstiegsflanke 4b eine Öffnung 20b angeordnet. Dabei sind die Randbegrenzungen der Öffnungen 20a und 20b jeweils bogenförmig ausgebildet, wobei diese aber auch andere Formen wie beispielsweise lineare, ellipsenförmige, kreisförmige und sonstige unregelmäßige Formen annehmen können. Diese Öffnungen 20a bzw. 20b nehmen jeweils maximal die Fläche der Anstiegsflanke 4a bzw. 4b ein und sind als Ausnehmung, beispielsweise mittels Ausstanzen oder durch Einschlitzen bzw. Einschneiden mit anschließender Verformung ausgebildet. Beispielsweise kann nach Setzen eines Schnittes im Bereich der Anstiegsflanke 4a bzw. 4b und Wegdrücken der Anstiegsflanke 4a bzw. 4b in Richtung der Hauptströmungsrichtung gemäß Pfeil 3 durch die wölbenartige Verformung eine bogenförmige Öffnung entstehen.

In einer weiteren Ausführungsform (nicht dargestellt) sind die Anstiegsflanken 4a und 4b vollständig offen. Ansonsten ist die Struktur wie in Fig. 1a ausgebildet. Die Berge 1a und 1b sind somit jeweils an deren stromaufwärts ausgerichteten Ende einseitig offen. Dadurch kann ein Teil des in Richtung des Pfeils 3 strömenden Abgases in den Berg hinein und nach unten ein eine andere Lage strömen. Dabei strömt das Abgas sofort nach Einströmen in die Öffnung und spätestens nach Aufprall auf die Abfallflanke 5a bzw. 5b nach unten weg. Die Öffnung wird dabei beispielsweise beim Berg 1a durch die Kanten des stromaufwärtigen Endes der Flanken 10a und 11a und des Plateaus 12a gebildet. Diese torartige Öffnung kann auch bogenförmig und insbesondere kuppelartig ausgeformt sein.

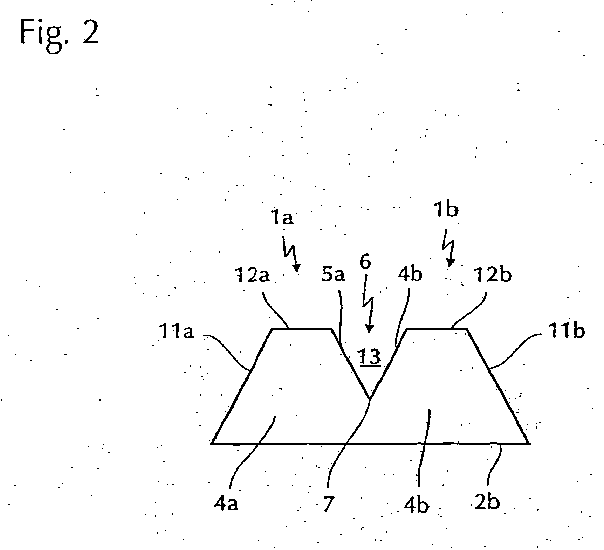

In den folgenden Ausführungen zu den Fig. 2, 3 und 4 sind gleiche Teile wie in Fig. 1a bzw. 1b mit gleichen Bezugszeichen bezeichnet.

In Fig. 2 ist die Anordnung gemäß Fig. 1a aus Sicht in Hauptströmungsrichtung gemäß Pfeil 3 dargestellt. Der zwischen jeweils benachbarten Reihen angeordnete Freiraum 13 kann aufgrund der Unregelmäßigkeit der Ausbildung der Senken in und auch quer zur Hauptströmungsrichtung unterschiedliche Querschnittsformen und -größen haben.

Bei der Verwendung von Streckmetall oder gelochtem Blech für die Metallfolie wird eine zusätzliche Durchmischung des Abgases in vertikaler Richtung erzielt. Bei einer mehrlagigen Anordnung wechselt der Abgasstrom beim Durchströmen in andere benachbarte Lagen.

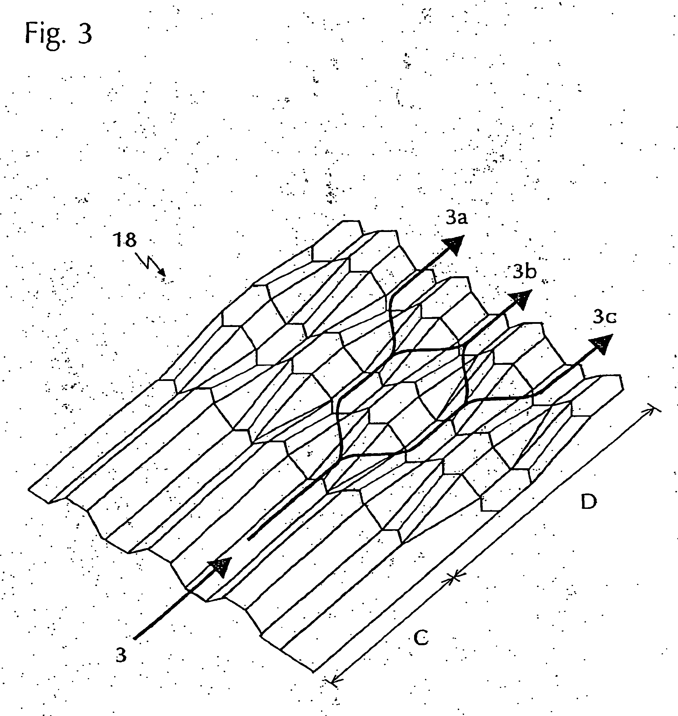

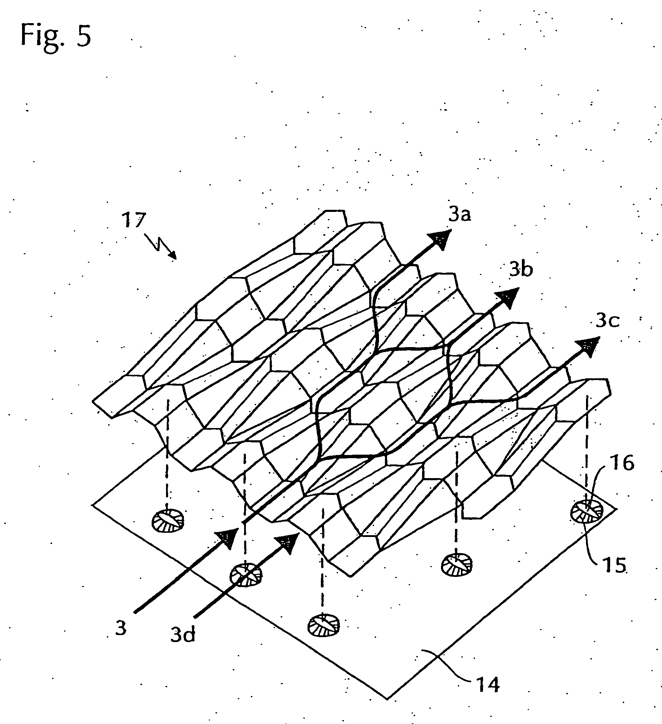

Fig. 3 zeigt einen Ausschnitt einer Metallfolie in einer perspektivischen Ansicht. Die Metallfolie 18 ist hier nur schematisch ohne genauere Darstellung der Senken dargestellt. Im Bereich C der Abgaseintrittsseite der Metallfolie sind die in Hauptströmungsrichtung nebeneinander liegenden Berge und Täler in Hauptströmungsrichtung langgestreckt, geradlinig und im wesentlichen jeweils auf einem Höhenniveau ausgebildet. Dieser Bereich eignet sich besonders für eine Beschichtung mit einer katalytisch aktiven Schicht. Der Bereich D weist die Struktur der erfindungsgemäßen Metallfolie auf. Weiterhin zeigt Fig. 5 ausschnittsweise eine mögliche Anströmung auf und mögliche Strömungsverläufe entlang der Metallfolie 18. Die mit Pfeil 3 angedeutete Hauptströmungsrichtung teilt sich nach Durchströmen des Bereiches C der Metallfolie 18 in die lokalen Strömungsrichtungen 3a, 3b und 3c auf.

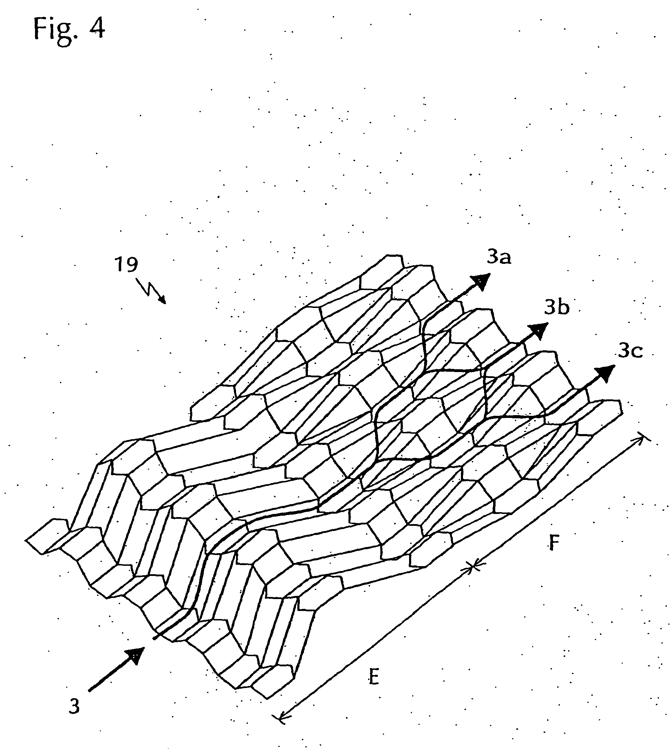

In Fig. 4 wird ein Ausschnitt einer weiteren Metallfolie in einer perspektivischen Ansicht gezeigt. Wie in Fig. 5 ist die Metallfolie 19 nur schematisch dargestellt und kann teilweise oder vollständig mit einer katalytisch aktiven Beschichtung versehen sein. Im Bereich E der Abgaseintrittsseite der Metallfolie sind die in Hauptströmungsrichtung nebeneinander liegenden Berge und Täler in und schräg zur Hauptströmungsrichtung abschnittsweise geradlinig ausgebildet und bilden die Form einer liegenden bzw. gekippten Welle. Der Bereich F weist die Struktur der erfindungsgemäßen Metallfolie auf. Nach Durchströmen des Bereiches E teilt sich die mit Pfeil 3 gekennzeichnete Hauptströmungsrichtung in die lokalen Strömungsrichtungen 3a, 3b und 3c auf.

Fig. 5 zeigt einen Ausschnitt einer kombinierten Anordnung der erfindungsgemäßen Metallfolie mit einer glatten, Öffnungen und inselartigen Erhebungen aufweisenden Lage in einer perspektivischen Ansicht. Die erfindungsgemäße Metallfolie 17 ist hier nur schematisch ohne genauere Darstellung der Senken dargestellt. Die glatte Lage 14 besteht ebenso aus einer Metallfolie und ist mit beulenartigen Erhebungen 15 und darin quer zur Hauptströmungsrichtung angeordneten schlitzartigen Öffnungen 16 versehen. Die Anordnung der glatten Lage 14 ist dabei so gewählt, dass die in den Erhebungen 15 angeordneten Öffnungen 16 im Bereich der Berge der erfindungsgemäßen Metallfolie 17 zu liegen kommen. Weiterhin zeigt Fig. 7 ausschnittsweise eine mögliche Anströmung des Abgases auf die Metallfolien 14 bzw. 17 und einen möglichen Strömungsverlauf des Abgases entlang der Metallfolien 14 bzw. 17. Die mit Pfeil 3 angedeutete Hauptströmungsrichtung teilt sich nach Auftreffen auf die Metallfolie 17 in die lokalen Strömungsrichtungen 3a, 3b und 3c auf. Die kombinierte Anordnung mit der glatten Lage ermöglicht dem an der Stirnseite zwischen der Metallfolie 17 und Metallfolie 14 eintretenden Teilstrom 3d ein Übertreten durch die Öffnungen 16 in benachbarte Lagen.

## Patentansprüche

1. Metallfolie mit eingeprägter Struktur zur Verwendung bei der Abgasreinigung von im Abgas enthaltenen Partikeln, die in Hauptströmungsrichtung abwechselnd Berge (1a) mit Anstiegsflanken (4a) und Abfallflanken (5a) und Täler (2a) aufweist, wobei die Berge (1a) und Täler (2a) parallel zur Hauptströmungsrichtung in Reihen unterteilt sind und die Berge (1b) und Täler (2b) benachbarter Reihen in Hauptströmungsrichtung gegeneinander in der Weise versetzt sind,
**dadurch gekennzeichnet,**
**dass** die Anstiegsflanken (4a) und Abfallflanken (5a) zueinander versetzt angeordneter Berge (1a, 1b) jeweils eine Senke (6) bilden, die versetzt zueinander angeordnete Täler (2a, 2b) verbindet,
**dass** die Senken (6) von einem Berg (1, 1a) einer ersten Reihe (1, 1a) entlang dessen Abfallflanke (5a) und über die Anstiegsflanke (4b) eines in der ersten Reihe benachbarten Reihe versetzt angeordneten Berges (1, 1b) verläuft,
wobei die Senken (6) in Hauptströmungsrichtung (3) betrachtet von der Höhe eines Berges (1, 1a) hangabwärts schräg zur Hauptströmungsrichtung (3) entlang der Abfallflanke (5a) bis zu einem Tiefpunkt (7) und von dort weiterhin schräg zur Hauptströmungsrichtung (3) hangaufwärts entlang der Anstiegsflanke (4b) bis zur Höhe des versetzt angeordneten Berges (1 b) verlaufen, dass der Tiefpunkt (7) einer Senke (6), unterhalb des höchsten Punktes der die Senke (6) bildenden Anstiegs- bzw. Abfallflanke (4b, 5a) und oberhalb der Höhe der zur Senke (6) benachbarten Täler (2a, 2b) liegt, und
**dass** die Senken (6) wulstartig ausgebildet sind, und unregelmäßige Störungszonen zur Verwirbelung und Kontaktierung des Abgases mit der Oberfläche, bildet und dass die eingeprägte Struktur der Metallfolie stromabwärts der jeweiligen Senke und in den luftabgewandten Bereichen Räume zur Ablagerung von Partikeln bildet.

2. Metallfolie nach Anspruch 1,
**dadurch gekennzeichnet,**
**dass** die Anstiegsflanken (4a, 4b, 11a, 10b) und/oder die Abfallflanken (5a, 5b, 10a, 11b) trapezförmig ausgebildet sind.

3. Metallfolie nach Anspruch 1 oder 2,
**dadurch gekennzeichnet,**
**dass** die Anstiegsflanke (4a, 4b) und/oder die Abfallflanke (5a, 5b) mindestens eine Öffnung (20a, 20b) aufweist.

4. Metallfolie nach Anspruch 3,
**dadurch gekennzeichnet,**
**dass** die Öffnung (20a, 20b) im wesentlichen den Bereich der Anstiegsflanke (4a, 4b) bzw. Abfallflanke (5a, 5b) einnimmt.

5. Metallfolie nach Anspruch 3 oder 4,
**dadurch gekennzeichnet,**
**dass** die Öffnung (20a, 20b) eine bogenförmige Randbegrenzung aufweist.

6. Metallfolie nach einem der vorhergehenden Ansprüche,
**dadurch gekennzeichnet,**
**dass** die Anstiegsflanken (4a, 4b) und/oder die Abfallflanken (5a, 5b) vollständig offen sind.

7. Metallfolie nach einem der vorhergehenden Ansprüche,
**dadurch gekennzeichnet,**
**dass** an den Anstiegsflanken (4a, 4b, 11a, 10b) und/oder Abfallflanken (5a, 5b, 10a, 11b) wulstartige Bereiche, welche die Senken (6) bilden, ausgebildet sind.

8. Metallfolie nach Anspruch 7,
**dadurch gekennzeichnet,**
**dass** zwischen den wulstartigen Bereichen Vertiefungen angeordnet sind.

9. Metallfolie nach Anspruch 8,
**dadurch gekennzeichnet,**
**dass** in den Vertiefungen Katalysatorgranulat angeordnet ist.

10. Metallfolie nach einem der vorhergehenden Ansprüche,
**dadurch gekennzeichnet,**
**dass** die Berge (1a, 1b) und/oder Täler unterschiedliche Höhen aufweisen.

11. Metallfolie nach einem der vorhergehenden Ansprüche,
**dadurch gekennzeichnet,**
**dass** die Berge (1a, 1b) und Täler (2a, 2b) unterschiedliche Längen und/oder Breiten aufweisen.

12. Metallfolie nach einem der vorhergehenden Ansprüche,
**dadurch gekennzeichnet,**
**dass** die Berge (1a, 1b) und Täler (2a, 2b) plateauartig ausgebildet sind.

13. Metallfolie nach einem der vorhergehenden Ansprüche,
**dadurch gekennzeichnet,**
**dass** die Berge (1a, 1b) und Täler (2a, 2b) wellenförmig ausgebildet sind.

14. Metallfolie nach einem der vorhergehenden Ansprüche,
**dadurch gekennzeichnet,**
**dass** die Berge (1a, 1b) und Täler (2a, 2b) kuppelartig ausgebildet sind.

15. Metallfolie nach einem der vorhergehenden Ansprüche,
**dadurch gekennzeichnet,**
**dass** die Berge (1a, 1b) und Täler (2a, 2b) spitz ausgebildet sind.

16. Metallfolie nach einem der vorhergehenden Ansprüche,
**dadurch gekennzeichnet,**
**dass** an der Abgaseintritts- und/oder Abgasaustrittsseite die Berge (1a, 1b) und Täler (2a, 2b) schräg zur Hauptströmungsrichtung angeordnet ist.

17. Metallfolie nach einem der vorhergehenden Ansprüche,
**dadurch gekennzeichnet,**
**dass** im Bereich der Abgaseintritts- und/oder Abgasaustrittsseite in Hauptströmungsrichtung nebeneinander liegende, geradlinige, langgestreckte und im wesentlichen auf einem Höhenniveau verlaufende Berge (1a, 1b) und Täler (2a, 2b) angeordnet sind.

18. Metallfolie nach einem der vorhergehenden Ansprüche,
**dadurch gekennzeichnet,**
**dass** im Bereich der Abgaseintritts- und/oder Abgasaustrittsseite in und schräg zur Hauptströmungsrichtung nebeneinander liegende, abschnittsweise geradlinig verlaufende Berge (1a, 1b) und Täler (2a, 2b) angeordnet sind.

19. Metallfolie nach einem der vorhergehenden Ansprüche,
**dadurch gekennzeichnet,**
**dass** sie mehrere Lagen aufweist.

20. Metallfolie nach einem der Ansprüche 1 bis 19,
**dadurch gekennzeichnet,**
**dass** sie mindestens teilweise mit einer Granulatschicht versehen ist.

21. Metallfolie nach einem der vorhergehenden Ansprüche,
**dadurch gekennzeichnet,**
**dass** die Anstiegsflanken (4a, 4b) und/oder Abfallflanken (5a, 5b) mindestens teilweise mit der Granulatschicht versehen ist.

22. Metallfolie nach Anspruch 20 oder 21,
**dadurch gekennzeichnet,**
**dass** die Granulatschicht unterschiedliche Schichtdicken aufweist.

23. Metallfolie nach einem der Ansprüche 20 bis 22,
**dadurch gekennzeichnet,**
**dass** als Granulatschicht Kornpulver verwendet wird, welches mindestens einen metallischen und/oder mindestens einen mineralischen Stoff umfasst.

24. Metallfolie nach Anspruch 23,
**dadurch gekennzeichnet,**
**dass** das Kornpulver als metallischen Stoff Sintermetall umfasst.

25. Metallfolie nach Anspruch 23 oder 24,
**dadurch gekennzeichnet,**
**dass** das Kornpulver zusätzlich Lot umfasst.

26. Metallfolie nach einem der Ansprüche 20 bis 25,
**dadurch gekennzeichnet,**
**dass** die Granulatschicht auf die Metallfolie aufgesintert ist.

## Claims

1. A metal foil with an embossed structure for use in exhaust gas cleaning of particles contained in exhaust gas, comprising peaks (1a), with ascending flanks (4a) and descending flanks (5a), and valleys (2a) alternating in the main direction of flow, with the peaks (1a) and valleys (2a) being subdivided into rows parallel to the main direction of flow and with the peaks (1b) and valleys (2b) of adjacent rows being offset with respect to each other in the main direction of flow, **characterized in that**:
the ascending flanks (4a) and the descending flanks (5a) of mutually offset peaks (1a, 1b) each form a depression (6) that joins mutually offset valleys (2a, 2b);
the depressions (6) extend from a peak (1, 1a) of a first row (1, 1a) along its descending flank (4b) of a peak (1, 1b) arranged offset in the first row of adjacent rows,
wherein the depressions (6), when viewed from the height of a peak (1a, 1b) in the main direction (3) of the flow, extend along the descending flank (5a) up to a low point (7) and from there in an oblique manner relative to the main direction (3) of flow up the slope along the ascending flank (4b) up to the height of the offset arranged peak (1b), that the low point (7) of a depression (6) lies beneath the highest point of the ascending and descending flank (4b, 5a) forming the depression (6) and above the height of the valleys (2a, 2b) adjacent to the depression (6);
the depressions (6) are provided with a bulbous configuration and irregular zones of disturbance are formed for turbulently mixing the exhaust gas and bringing said gas into contact with the surface; and
the embossed structure of the metal foil downstream of the respective depression and within the regions facing away from the air forms spaces for the deposition of the particles.

2. A metal foil according to claim 1, **characterized in that** the ascending flanks (4a, 4b, 11a, 10b) and/or the descending flanks (5a, 5b, 10a, 11b) are provided with a trapezoid configuration.

3. A metal foil according to claim 1 or 2, **characterized in that** the ascending flank (4a, 4b) and/or the descending flank (5a, 5b) comprise at least one opening (20a, 20b).

4. A metal foil according to claim 3, **characterized in that** the opening (20a, 20b) substantially assumes the region of the ascending flank (4a, 4b) or ascending flank (5a, 5b).

5. A metal foil according to claim 3 or 4, **characterized in that** the opening (20a, 20b) comprises an arc-shaped boundary limit.

6. A metal foil according to one of the preceding claims, **characterized in that** the ascending flanks (4a, 4b) and/or the descending flanks (5a, 5b) are completely open.

7. A metal foil according to one of the preceding claims, **characterized in that** bulbous regions which form the depressions (6) are formed on the ascending flanks (4a, 4b, 11a, 10b) and/or the descending flanks (5a, 5b, 10a, 11b).

8. A metal foil according to claim 7, **characterized in that** indentations are arranged between the bulbous regions.

9. A metal foil according to claim 8, **characterized in that** catalyst granulate is arranged in the indentations.

10. A metal foil according to one of the preceding claims, **characterized in that** the peaks (1a, 1b) and/or valleys have different heights.

11. A metal foil according to one of the preceding claims, **characterized in that** the peaks (1a, 1b) and valleys (2a, 2b) have different lengths and/or widths.

12. A metal foil according to one of the preceding claims, **characterized in that** the peaks (1a, 1b) and valleys (2a, 2b) are provided with a plateau-like configuration.

13. A metal foil according to one of the preceding claims, **characterized in that** the peaks (1a, 1b) and valleys (2a, 2b) are provided with a wave-like configuration.

14. A metal foil according to one of the preceding claims, **characterized in that** the peaks (1a, 1b) and valleys (2a, 2b) are provided with a cupola-like configuration.

15. A metal foil according to one of the preceding claims, **characterized in that** the peaks (1a, 1b) and valleys (2a, 2b) are provided with a pointed configuration.

16. A metal foil according to one of the preceding claims, **characterized in that** the peaks (1a, 1b) and valleys (2a, 3b) are arranged obliquely to the main direction of flow on the exhaust gas entrance side and/or exhaust gas exit side.

17. A metal foil according to one of the preceding claims, **characterized in that** peaks (1a, 1b) and valleys (2a, 2b) extending substantially at one height level, oblong, rectilinear and lying next to one another in the main direction of flow are arranged in the region of the exhaust gas entrance side and/or exhaust gas exit side.

18. A metal foil according to one of the preceding claims, **characterized in that** peaks (1a, 1b) and valleys (2a, 2b) running rectilinearly in sections and lying next to one another in and obliquely to the main direction of flow are arranged in the region of the exhaust gas entrance side and/or exhaust gas exit side.

19. A metal foil according to one of the preceding claims, **characterized in that** it comprises several layers.

20. A metal foil according to one of claims 1 to 19, **characterized in that** that it is covered at least partially with a granulate layer.

21. A metal foil according to one of the preceding claims, **characterized in that** the ascending flanks (4a, 4b) and/or descending flanks (5a, 5b) are provided at least partly with a granulate layer.

22. A metal foil according to claim 20 or 21, **characterized in that** the granulate layer has different layer thicknesses.

23. A metal foil according to one of the claims 20 to 22, **characterized in that** granulated powder is used as a granulate layer which comprises at last one metallic and/or at least one mineral material.

24. A metal foil according to claim 23, **characterized in that** the granulated powder comprises sintered metal as granulated powder.

25. A metal foil according to claim 23 or 24, **characterized in that** the granulated powder additionally comprises solder.

26. A metal foil according to one of the claims 20 to 25, **characterized in that** the granulate layer is sintered onto the metal foil.

## Revendications

1. Feuille métallique avec une structure gaufrée pour l'utilisation dans la purification de gaz d'échappement des particules contenues dans le gaz d'échappement, laquelle présente en alternance dans le sens principal d'écoulement des élévations (1a) avec des flancs de montée (4a) et de descente (5a), et des creux (2a), les élévations (1a) et les creux (2a) étant répartis en rangée parallèlement au sens principal d'écoulement et les élévations (1b) et les creux (2b) de rangées voisines étant décalés les uns par rapport aux autres dans le sens d'écoulement principal, **caractérisée en ce que** les flancs de montée (4a) et les flancs de descente (5a) d'élévations (1a, 1b) disposées en décalé les unes par rapport aux autres forment respectivement une dépression (6) qui relie des creux (2a, 2b) disposés décalés entre eux,
**en ce que** les dépressions (6) d'une élévation (1, 1a) d'une première rangée (1, 1a) s'étendent le long de son flanc de descente (5a) et au-dessus du flanc de montée (4b) d'une élévation (1, 1b) disposée en décalé dans la rangée voisine de la première rangée,
les dépressions (6) s'étendant, observées dans le sens principal d'écoulement de la hauteur d'une élévation (1, 1a) en descendant le versant incliné par rapport au sens principal d'écoulement (3) le long du flanc de descente (5a) jusqu'à un point bas (7) et de là en continu incliné par rapport au sens principal d'écoulement (3) en montant le versant le long du flanc de montée (4b) jusqu'à la hauteur de l'élévation (1b) disposée en décalé,
**en ce que** le point bas (7) d'une dépression (6) se trouve en dessous du point le plus haut du flanc de montée respectivement de descente (4b, 5a) formant la dépression (6) et au-dessus de la hauteur des creux (2a, 2b) voisins de la dépression (6), et
**en ce que** les dépressions (6) ont une forme de bourrelet et forment des zones de perturbations irrégulières pour la mise en turbulence des gaz d'échappement et pour la mise en contact dudit gaz avec la surface et **en ce que** la structure gaufrée de la feuille métallique en aval de chaque dépression et dans les zones détournées de l'air forme des espaces pour le dépôt des particules.

2. Feuille métallique selon la revendication 1, **caractérisée en ce que** les flancs de montée (4a, 4b, 11a, 10b) et/ou les flancs de descente (5a, 5b, 10a, 11b) ont une forme trapézoïdale.

3. Feuille métallique selon la revendication 1 ou 2, **caractérisée en ce que** les flancs de montée (4a, 4b) et/ou les flancs de descente (5a, 5b) présentent au moins une ouverture (20a, 20b).

4. Feuille métallique selon la revendication 3, **caractérisée en ce que** les ouvertures (20a, 20b) occupent sensiblement la zone du flanc de montée (4a, 4b) et/ou du flanc de descente (5a, 5b).

5. Feuille métallique selon la revendication 3 ou 4, **caractérisée en ce que** l'ouverture (20a, 20b) présente une délimitation de bordure en forme d'arc.

6. Feuille métallique selon l'une des revendications précédentes, **caractérisée en ce que** les flancs de montée (4a, 4b) et/ou les flancs de descente (5a, 5b) sont complètement ouverts.

7. Feuille métallique selon l'une des revendications précédentes, **caractérisée en ce que** sur les flancs de montée (4a, 4b, 11a, 10b) et/ou les flancs de descente (5a, 5b, 10a, 11b) sont ménagées des zones en forme de bourrelet qui forment les dépressions (6).

8. Feuille métallique selon la revendication 7, **caractérisée en ce que** des cavités sont disposées entre les zones en bourrelet.

9. Feuille métallique selon la revendication 8, **caractérisée en ce que** le granulat catalyseur est disposé dans les cavités.

10. Feuille métallique selon l'une des revendications précédentes, **caractérisée en ce que** les élévations (1a, 1b) et/ou les creux présentent différentes hauteurs.

11. Feuille métallique selon l'une des revendications précédentes, **caractérisée en ce que** les élévations (1a, 1b) et les creux (2a, 2b) présentent des longueurs et/ou largeurs différentes.

12. Feuille métallique selon l'une des revendications précédentes, **caractérisée en ce que** les élévations (1a, 1b) et les creux (2a, 2b) sont réalisés comme des plateaux..

13. Feuille métallique selon l'une des revendications précédentes, **caractérisée en ce que** les élévations (1a, 1b) et les creux (2a, 2b) sont réalisés comme des ondulations.

14. Feuille métallique selon l'une des revendications précédentes, **caractérisée en ce que** les élévations (1a, 1b) et les creux (2a, 2b) sont réalisés comme des coupoles.

15. Feuille métallique selon l'une des revendications précédentes, **caractérisée en ce que** les élévations (1a, 1b) et les creux (2a, 2b) ont une forme pointue.

16. Feuille métallique selon l'une des revendications précédentes, **caractérisée en ce que** les élévations (1a, 1b) et les creux (2a, 2b) sont disposés à l'entrée et/ou à la sortie des gaz d'échappement de manière inclinée par rapport au sens principal d'écoulement.

17. Feuille métallique selon l'une des revendications précédentes, **caractérisée en ce que** des élévations (1a, 1b) et/ou des creux (2a, 2b) s'étendant sensiblement à un niveau de hauteur, allongés, rectilignes et se trouvant les uns à côté des autres au sens principal d'écoulement sont disposés dans la zone de l'entrée et/ou de la sortie des gaz d'échappement.

18. Feuille métallique selon l'une des revendications précédentes, **caractérisée en ce que** des élévations (1a, 1b) et/ou des creux (2a, 2b) s'étendant par sections allongés et se trouvant les uns à côté des autres au sens principal ou de manière inclinée au sens principal d'écoulement sont disposés dans la zone de l'entrée et/ou de la sortie des gaz d'échappement.

19. Feuille métallique selon l'une des revendications précédentes, **caractérisée en ce qu'**elle présente plusieurs couches.

20. Feuille métallique selon l'une des revendications 1 à 19, **caractérisée en ce qu'**elle est munie au moins partiellement d'une couche de granulat.

21. Feuille métallique selon l'une des revendications précédentes, **caractérisée en ce que** les flancs de montée (4a, 4b) et/ou les flancs de descente (5a, 5b) sont munis au moins partiellement d'une couche de granulat.

22. Feuille métallique selon la revendication 20 ou 21, **caractérisée en ce que** la couche de granulat présente des épaisseurs différentes de couche.

23. Feuille métallique selon l'une des revendications 20 à 22, **caractérisée en ce qu'**en tant que couche de granulat, on utilise de la poudre de grain qui comprend au moins une substance métallique et/ou au moins une substance minérale.

24. Feuille métallique selon la revendication 23, **caractérisée en ce que** la poudre de grain comprend du métal fritté comme substance métallique.

25. Feuille métallique selon la revendication 23 ou 24, **caractérisée en ce que** la poudre de grain contient en plus du métal d'apport de brasage.

26. Feuille métallique selon l'une des revendications 20 à 25, **caractérisée en ce que** la couche de granulat est frittée sur la feuille métallique.
